# EUROPÄISCHE PATENTANMELDUNG

(11) **EP 2 108 871 A2**
(43) Veröffentlichungstag der Anmeldung: **14.10.2009**
(21) Anmeldenummer: 09100220.4
(22) Anmeldetag: 03.04.2009
(51) Int. Cl.: F16L 19/065, F16L 19/08

(54) **Steckverbinder**

(30) Priorität: 12.04.2008 DE 202008005090 U
(71) Anmelder: Gebrüder Beul GmbH & Co KG, 57439 Attendorn (DE)
(72) Erfinder: Pülmanns, Gerhard, 47918 Tönisvorst (DE); Schröder, Klaus, 57439 Attendorn (DE)
(74) Vertreter: Haverkamp, Jens

(57) **Zusammenfassung**

Ein Steckverbinder S dient zum Anschluss eines Rohrendes 16. Der Steckverbinder S umfasst einen Grundkörper 1 mit einer Aufnahme zur Aufnahme des Rohrendes 16, ein Überwurfelement 2 mit einer Durchgangsöffnung 3 zum Einführen des Rohrendes 16, wobei Verbindungsmittel zur Befestigung des Überwurfelementes 2 am Grundkörper 1 vorgesehen sind. Ferner umfasst der Steckverbinder S ein Dichtelement 4 zur Abdichtung des Grundkörpers 1 gegen die äußere Mantelfläche des anzuschließenden Rohrendes 16, einen Klemmring 5, der bei einer gegen die Einschubrichtung des Rohrendes 16 gerichteten, axialer Bewegung mit einem Widerlager in Wechselwirkung tritt und als Folge einer radial nach innen gerichteten Deformation zum Verklemmen des Rohrendes 16 unterliegt sowie eine beim Anschluss das Rohende 16 umschließende und nach erfolgtem Anschluss an das Rohrende 16 angeschlossene Mitnehmerscheibe 6. Gemäß einer ersten Ausgestaltung ist die Mitnehmerscheibe 6 in Einschubrichtung des Rohrendes 16 in den Steckverbinder S zwischen dem Klemmring 5 und dem Dichtelement 4 angeordnet. Bei einer Bewegung des in den Steckverbinder S eingesetzten Rohrendes 16 wird aufgrund des erfolgten Anschlusses der Mitnehmerscheibe 6 an das Rohrende 16 gegen die Einschubrichtung diese von dem Rohrende 16 mitgenommen und beaufschlagt in dieser Richtung den Klemmring 5 mit der Kraft zum Verklemmen desselben an der äußeren Mantelfläche des Rohrendes 16. Gemäß einer weiteren Ausgestaltung ist vorgesehen, dass der Klemmring 5 mehreren in Umfangsrichtung angeordnete, eine axiale Erstreckung aufweisende, durch jeweils einen Spalt voneinander getrennte Klemmsegmente 10 umfasst, die zum Verklemmen eines Rohrendes 16 eine in Bezug auf die Längsachse des Rohrendes 16 radial nach innen gerichtete Bewegung ausführen.

## Beschreibung

Die Erfindung betrifft einen Steckverbinder zum Anschluss eines Rohrendes, umfassend einen Grundkörper mit einer Aufnahme zur Aufnahme des Rohrendes, ein Überwurfelement mit einer Durchgangsöffnung zum Einführen des Rohrendes, wobei Verbindungsmittel zur Befestigung des Überwurfelementes am Grundkörper vorgesehen sind, ein Dichtelement zur Abdichtung des Grundkörpers gegen die äußere Mantelfläche des anzuschließenden Rohrendes, einen Klemmring, der bei einer gegen die Einschubrichtung des Rohrendes gerichteten, axialen Bewegung mit einem Widerlager in Wechselwirkung tritt und als Folge einer radial nach innen gerichteten Deformation zum Verklemmen des Rohrendes unterliegt sowie eine Mitnehmerscheibe, die beim Anschluss das Rohrende umschließende und nach erfolgtem Anschluss an das Rohrende angeschlossene Mitnehmerscheibe.

Steckverbinder, die einen Anschluss eines Rohrendes ohne Werkzeug, d.h. im Wesentlichen lediglich durch ein Einstecken oder ein Aufschrauben von Komponenten ermöglichen, sind in einer Vielzahl von Ausgestaltungen bekannt. Beispielhaft wird auf US 2003-197380 A verwiesen. Der durch diese Druckschrift offenbarte Steckverbinder umfasst einen Grundkörper mit einer darin in einer Aufnahme zur Aufnahme eines Rohrendes eingelegten Dichtung in Form eines O-Rings. Zusätzlich ist ein Klemmring vorgesehen, der im montierten Zustand eine radial nach innen gerichtete Anpresskraft auf das Rohrende ausübt. Der Klemmring verhindert im Zusammenspiel mit den übrigen Komponenten des Steckverbinders ein Herausziehen des Rohrendes aus dem Dichtelement im Grundkörper. Hierzu wird eine Überwurfmutter verwendet, wobei bei der Montage ein Rohrende durch eine zentrale Durchgangsöffnung geführt wird. In einem nächsten Montageschritt wird die Überwurfmutter mit dem Grundkörper verschraubt. Dabei liegt an einer radialen Innenwandung der Überwurfmutter eine konische Stellfläche vor, die komplementär zu einer hierzu in Wirkverbindung tretenden konischen Stellfläche am Klemmring ausgebildet ist. Aufgrund der konischen Ablaufflächen führt das Aufschrauben der Überwurfmutter am Grundkörper zu einer gleichzeitigen axialen und radialen Kraftbeaufschlagung des Klemmrings, der dadurch gegen das Dichtelement und gegen die Außenwandung des eingeführten Rohrendes gedrückt wird. Nachteilig an einer solchen Anordnung ist, dass die Sicherung des Rohrendes von einer hinreichend angezogenen Verschraubung zwischen der Überwurfmutter und dem Grundkörper abhängt. Dieses stellt eine potenzielle Fehlerquelle beim Anschließen dar.

Bevorzugt werden Ausgestaltungen von Steckverbindern, bei der die Grundfunktionen Dichtung und Absicherung gegen ein Freikommen des Rohrendes bereits durch den Arbeitsgang des Einsteckens des Rohrendes in den Steckverbinder bewirkt werden. Hierzu wird auf WO 02/070940 A1 verwiesen. Offenbart ist in diesem Dokument ein Steckverbinder, der in seinem Innern zusätzlich zum Dichtelement und zum Klemmring einen Stellkörper aufweist, der als elastisch aufweitbares Element mit einer gegenüber dem Außendurchmesser des Rohrendes mit Mindermaß versehenen Durchgangsöffnung ausgestaltet ist. Beim Einstecken des Rohrendes in den Steckverbinder weitet sich der Stellkörper auf. Dabei wird die resultierende, radial nach außen gerichtete Bewegung durch eine konische Abstützung des Stellkörpers wenigstens zum Teil in eine Axialbewegung umgelenkt, die dazu dient, den Klemmring entgegen der Einschubrichtung des Rohrendes zu bewegen. Durch diese Bewegung kommt der Klemmring in Kontakt zu einer ihm zugeordneten konischen Stellschräge und wird infolge klemmend gegen die Außenwandung des Rohrendes geführt. Eine solche Ausgestaltung ist konstruktiv aufwendig, darüber hinaus ist die auf den Klemmring aufbringbare Stellkraft begrenzt. Auch besteht die Gefahr, dass, wenn die von dem Klemmring auf das in den Steckverbinder eingesetzte Rohrende wirkende Klemmkraft nicht hinreichend ist, das Rohr aus dem Steckverbinder herausgezogen bzw. beim Abdrücken der Installation herausgedrückt werden kann.

Des Weiteren wurde durch DE 195 03 301 C1 vorgeschlagen, einen separat zu einem Dichtelement ausgebildeten Klemmring, dem gehäuseseitig eine Stellschräge zugeordnet ist, radial innen mit einer Widerhakenanordnung zu versehen. Durch die Widerhaken wird der Klemmring bei einer Abzugbewegung des Rohrendes mitgenommen und mit der Stellschräge am Gehäuse in Kontakt gebracht. Im Verlauf der Abzugsbewegung wird der Klemmring in zunehmendem Maße gegen die Wandung des Rohrendes gedrückt, bis eine endgültige Verklemmung erreicht ist. Nachteilig an einer solchen Anordnung ist, dass die zur Wandung des Rohrendes hinweisende Anlagefläche des Klemmrings zwei Aufgaben erfüllen muss. Dieses ist zum einen das Sicherstellen der Mitnahme des Klemmelements bei einer Abzugsbewegung des Rohrendes und zum anderen die radial nach innen gerichtete Kraftbeaufschlagung. Hieraus kann insbesondere für Steckverbinder, die Vibrationen oder Stößen ausgesetzt sind, eine Lockerung der Verklemmung des Rohrendes im Steckverbinder nicht sicher ausgeschlossen werden.

Weitere Ausgestaltungen von Rohrverbindern sehen zusätzlich zu einem Dichtelement zwei getrennte Komponenten vor, die im Zusammenspiel zur Abzugssicherung dienen. Eine erste Komponente ist eine Mitnehmerscheibe, die einer Einsteckbewegung des Rohrendes einen geringen Widerstand und einer Abzugsbewegung einen hohen Widerstand entgegensetzt. Eine zweite Komponente ist der eigentliche Klemmring, der zur Sicherung des Rohrendes nach radial innen bewegt wird. Die aus der US 4,712,813 B und der EP 1 319 881 B1 bekannten Ausgestaltungen sehen in Einschubrichtung die Anordnung eines Klemmrings gefolgt von einem Dichtelement und einer nachfolgenden Mitnehmerscheibe vor. Zur Montage wird zunächst das Rohrende vollständig durch die genannten drei Komponenten geschoben und in einem weiteren Montageschritt wird ein Zug entgegen der ursprünglichen Einschubrichtung auf das Rohrende ausgeübt. Hierdurch wird der Klemmring gegen das Dichtelement geführt, das wiederum den Klemmring so mit einer Axialkraft beaufschlagt, dass dieser seine Klemmfunktion erfüllt. Letzteres kann durch komplementär und konisch zueinander ausgebildete Ablaufflächen am Klemmring bewirkt werden. Nachteilig an einer solchen Ausgestaltung ist jedoch, dass zur ordnungsgemäßen Funktion des Klemmrings der Dichtring um eine hinreichende Strecke in axialer Richtung zu bewegen ist. Aufgrund der Reibung eines anliegenden Dichtrings an der Gehäuseinnenwandung kann ein Monteur unter Umständen die für eine vollständige Rückbewegung notwendige Kraft falsch einschätzen, wodurch die Klemmwirkung nur unvollständig eintritt.

Der Erfindung liegt ausgehend von dem diskutierten Stand der Technik die Aufgabe zugrunde, einen Steckverbinder vorzuschlagen, der die Nachteile bekannter Steckverbinder überwindet. Dabei soll sich der Steckverbinder insbesondere durch eine einfache Handhabung auszeichnen. Darüber hinaus soll der Steckverbinder konstruktiv und fertigungstechnisch einfach ausgebildet sein.

Diese Aufgabe wird erfindungsgemäß durch einen Steckverbinder mit den Merkmalen der unabhängigen Ansprüche 1 oder 13 gelöst.

Für die Erfindungsvariante gemäß Anspruch 1 sind in Einschubrichtung des Rohrendes die für die Dichtung und Abzugssicherung wesentliche Komponenten wie folgt angeordnet: Zunächst wird vom Rohrende ein Klemmring durchquert, gefolgt von der ringförmigen Mitnehmerscheibe und einem in Einschubrichtung nachfolgenden Dichtelement. Demnach liegt die Mitnehmerscheibe zwischen Klemmring und Dichtelement, so dass bei einer Rückbewegung des Rohrendes die gegen einen Abzug sichernde Mitnehmerscheibe gegen den Klemmring wirkt. Dieser wird als Folge mit einer Axialkraft beaufschlagt und tritt in Wechselwirkung mit einem Widerlager, beispielsweise einem Abschnitt der Innenwandung eines die Anordnung umschließenden Überwurfelements, beispielsweise einer Überwurfmutter. Das Widerlager ist so gestaltet ist, dass der Klemmring wenigstens in Teilen nach radial nach innen deformiert oder verschoben wird und so die Mantelfläche des Rohrendes sicher verklemmt. Diese Ausgestaltung erlaubt eine unmittelbare Wechselwirkung zwischen der Mitnehmerscheibe und dem Klemmring. Insbesondere ist zwischen diesen beiden Komponenten - Klemmring und Mitnehmerscheibe - kein Dichtelement angeordnet, so dass ein Monteur mit einer gegebenenfalls zur Verklemmung ausgeführten Rückwärtsbewegung des Rohrendes nach dem vorausgehenden, vollständigen Einschieben unmittelbar die Axialkraft auf den Klemmring aufbringt und diese auch bei der Handhabung spürt.

Bei diesem Steckverbinder sind die beiden Funktionen "Abdichtung des eingesetzten Rohrendes" und "Verklemmen des eingesetzten Rohrendes" voneinander getrennt. Das Dichtelement, welches vorzugsweise als O-Ring ausgebildet sein wird, befindet sich in Einsteckrichtung des Rohres bzw. seines Rohrendes hinter den einer Verklemmung des Rohrendes dienenden Komponenten. Eine Axialbewegung des Rohrendes innerhalb der Aufnahme in dem Grundkörper mit einem für die Verklemmung notwendigen Bewegungsbetrag hat keine Änderung an der Abdichtungsgeometrie zur Folge.

Gemäß einer Ausgestaltungsvariante weisen sowohl der Klemmring als auch die Mitnehmerscheibe aneinander liegende ringförmige Teile auf, die nachfolgend als klemmseitiger Tragring und als abzugseitiger Tragring bezeichnet werden. Diese beiden Tragringe werden zur Realisierung der Klemmung gegeneinander geführt und übertragen die aufgebrachte Axialkraft. Dabei werden der klemmseitige Tragring und der abzugsseitige Tragring selbst im Wesentlichen nicht deformiert.

Das radial nach innen gerichtete Ausweichen zur Verklemmung des Rohrabschnitts erfolgt bevorzugt mittels radial beweglicher Klemmsegmente am Klemmring, die mit dem klemmseitigen Tragring über eine materialgeschwächte Knickstelle in Verbindung stehen. Als Folge wird die Axialbewegung auf verbesserte Weise in eine radial nach innen gerichtete Bewegung von hierfür vorgesehenen Teilkomponenten am Klemmring umgesetzt.

Bei einer weiteren Ausgestaltung ist der Mitnehmerscheibe eine zusätzliche Funktion zugeordnet. Dabei ist eine Abstreiflippe vorgesehen, die sich über den gesamten Innenumfang des Klemmrings erstreckt und die die Aufgabe erfüllt, die Außenwandung des Rohrelementes beim Einschieben von Schmutz zu reinigen. Ferner können durch die Abstreiflippe nach außen von der Wandung des Rohrendes abstehende Späne abgenommen und Riefen geglättet werden. Durch diese zusätzliche Funktion wird die Wandung des Rohrendes vor dem Erreichen des Dichtmittels zur Optimierung der Dichtfunktion behandelt.

Bei einer bevorzugten Ausgestaltung übernimmt die vorstehend erläuterte Abstreiflippe zugleich die Funktion der Abzugssicherung. Hierzu ist die umlaufende Abstreiflippe gegenüber der Radialrichtung angestellt, wobei als Abzugssicherung eine Neigung in Einschubrichtung des Rohrendes, vorgesehen ist.

Mitnehmerscheibe und Klemmring können als separate Bauteile ausgebildet sein. Zur Verbesserung der Montagesicherheit sind diese jedoch miteinander verbunden und stellen eine gegenständliche Einheit dar. Hierbei können beispielsweise eine stoffschlüssige Verbindung wie eine Verklebung oder eine formschlüssige Verbindung, beispielsweise mittels einer Bördelung, in Betracht kommen.

Im Rahmen der Erfindung ist auch eine einstückige Ausbildung des Klemmrings und der Mitnehmerscheibe möglich. Dabei ist für eine solche einteilige Komponente der Bereich, der zur Abzugssicherung mit einem Rohrende zusammenwirkt und damit die Funktion der Mitnehmerscheibe übernimmt, von jenem Bereich axial beabstandet, der die Aufgaben des Klemmrings übernimmt, d.h. der durch Deformation oder eine Bewegung von Teilkomponenten nach radial innen auf die Wandung des Rohrendes zubewegt wird.

Die Ausgestaltungsvariante gemäß Anspruch 13 betrifft den Klemmring und das Widerlager, etwa einen Abschnitt der Innenwandung des Überwurfelementes, beispielsweise der Überwurfmutter mit dem dieser in Wechselwirkung tritt. Dabei weist der Steckverbinder gehäuseseitig eine Stellschräge auf, gegen die der Klemmring axial bewegt wird. Erfindungsgemäß ist diese Stellschräge wenigstens in einem Endabschnitt gekrümmt ausgebildet, d.h. ihr Stellwinkel nimmt mit zunehmenden Abgleiten des Klemmrings, also bei einer Bewegung entgegen der Einsteckbewegung des Rohrendes zu. Durch diese Maßnahme wird der nach radial innen zu führende Teil des Klemmrings zunächst nur moderat nach innen bewegt und erst im Abschnitt mit zunehmendem Stellwinkel nimmt die Radialbewegung gegenüber der Axialbewegung abrupt zu, so dass die Klemmwirkung ohne ein Entlangschleifen der Klemmbacken, insbesondere der an den Klemmbacken befindlichen Klemmrillen auf der Außenwandung des Rohrendes bewirkt wird. Sind für eine bevorzugte Ausgestaltung Klemmrillen oder Ähnliches auf den Klemmbacken vorgesehen, graben sich diese unmittelbar in das Wandungsmaterial ein und verhindern so sicher eine Bewegung des Rohrendes in beide Axialrichtungen. Der Klemmring ist als geschlossener Ringkörper mit in axialer Richtung daran angeformten Klemmsegmenten ausgebildet. Die Klemmsegmente selbst sind durch Spalte voneinander getrennt. Die Klemmsegmente sind vorzugsweise über eine materialgeschwächte Knickstelle an den geschlossenen Tragring angebunden. Diese Ausgestaltung des Klemmringes und die Ausgestaltung der Stellschräge etwa des Überwurfelementes gewährleisten, dass sich die an den Klemmbacken befindlichen Klemmrillen auf kurzer Bewegungsstelle des Klemmringes in axialer Richtung in die Mantelfläche des Rohrendes eingraben. Infolge dessen kann der lichte Innendurchmesser des Klemmringes bei nicht eingestecktem Rohr so groß sein, dass beim Einstecken des Rohres dieses nicht an den Klemmsegmenten bzw. den daran befindlichen Klemmrillen berührend anliegt bzw. vorbeigeführt wird. Daher sind Beschädigungen der Mantelfläche des Rohres vermieden. Es ist daher möglich, den Klemmring aus Metall herzustellen, was bei Steckverbindern des Standes der Technik aufgrund der Problematik des möglichen Verletzens der Mantelfläche des einzusteckenden Rohres nicht möglich war. Mit Klemmringen aus Metall können höhere auf die äußere Mantelfläche des Rohrendes wirkende Klemmkräfte aufgebracht werden. Insbesondere können Klemmrillen, beispielsweise sägezahnartig ausgebildet, tiefer in die Mantelfläche des Rohres eingedrückt werden.

Gemäß einer Ausgestaltung sind auch die zur Stellschräge an der Innenwandung des Gehäuses komplementären Ablaufflächen an der Außenwandung des Klemmrings gekrümmt ausgebildet, sodass der vorstehend genannte Effekt verstärkt wird.

Die vorausgehend dargelegte, zweite Erfindungsvariante kann in Kombination mit der ersten Erfindungsvariante und damit der Aspekt der Anordnung der Mitnehmerscheibe zwischen dem Klemmring und dem Dichtungsmittel verwendet werden. Denkbar ist auch, die zweite Erfindungsvariante unabhängig von der weiteren Gestaltung und insbesondere der Anordnung der Mitnehmerscheibe für einen Steckverbinder zu verwenden.

Nachfolgend wird die Erfindung anhand eines Ausgestaltungsbeispiels unter Bezugnahme auf die beigefügten Figuren beschrieben. Es zeigen:
- **Fig. 1:**: einen Axialteilschnitt nach Art einer Explosionsdarstellung zum Darstellen der Einzelkomponenten eines Steckverbinders,
- **Fig. 2**:: eine zweite Ausgestaltungsvariante eines erfindungsgemäßen Steckverbinders im Axialteilschnitt,

- **Fig. 3:**: eine Baueinheit, gebildet aus einem Klemmring und einer Mitnehmerscheibe des Steckverbinders der Figur 2,
- **Fig. 4:**: einen Ausschnitt eines Axialschnittes durch den Steckverbinder der Figur 2 mit einem darin eingeschobenen Rohrende vor dem Verklemmen,
- **Fig. 5:**: eine Darstellung entsprechend derjenigen der Figur 4 mit dem darin eingeschobenen und bestimmungsgemäß verklemmten Rohrende.

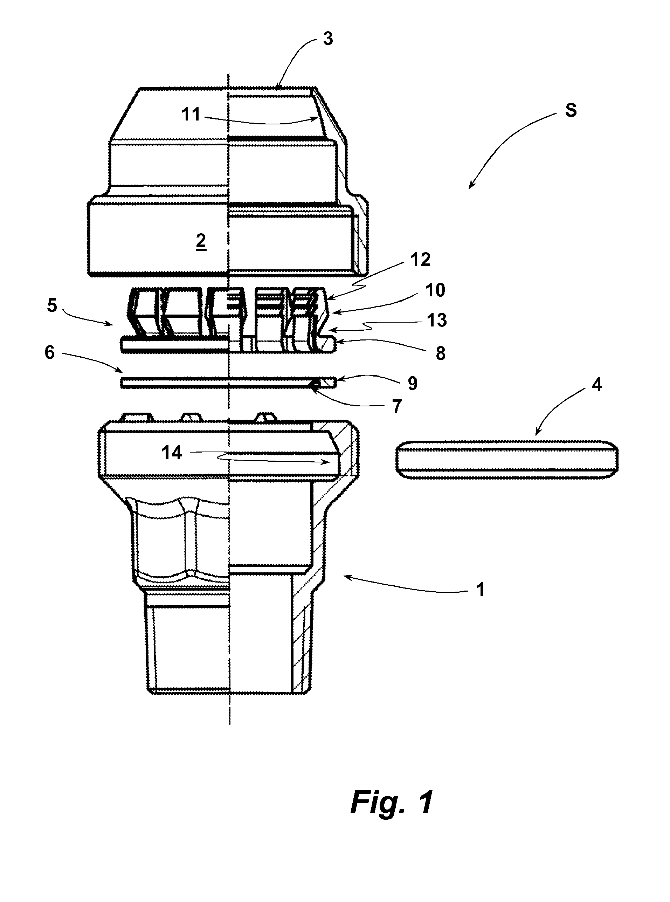

Figur 1 zeigt die Grundkomponenten eines erfindungsgemäßen Steckverbinders S. Dargestellt ist der Grundkörper 1 und eine diesem zugeordnete Überwurfmutter 2 als Überwurfelement. Aufgrund ihrer Ausbildung als Überwurfmutter 2 ist dieses Überwurfelement mittels eines Gewindes mit dem Grundkörper 1 verschraubt. Die Überwurfmutter 2 weist eine zentral angelegte Durchgangsöffnung 3 auf, durch die bei der Montage zum Anschließen eines Rohrendes an den Steckverbinder S das Rohrende geführt wird. Der Grundkörper 1 schließt eine Aufnahme zur Aufnahme eines in den Steckverbinder S einsetzenden Rohrendes ein. Ein als Dichtring ausgebildetes Dichtelement 4 ist in dem Grundkörper 1 angeordnet. Zur Verklemmung und Sicherung eines am Dichtelement 4 anliegenden Rohrendes ist eine Mitnehmerscheibe 6 vorgesehen, die zwischen dem Dichtelement 4 und einem Klemmring 5 angeordnet ist. Beim Einführen eines Rohrendes wird dieses zentral durch den Klemmring 5 und die Mitnehmerscheibe 6 geführt. Dabei ist im nicht verklemmten Ausgangszustand der Klemmring 5 bezüglich seines Innendurchmessers dergestalt ausgebildet, dass ein Vorbeiführen der Mantelfläche des Rohrendes und damit dessen Einführung in den Steckverbinder S möglich ist, ohne dass die Mantelfläche des Rohrendes in Kontakt mit dem Klemmring gelangt. Die Mitnehmerscheibe 6 des dargestellten Ausführungsbeispiels verfügt über einen umlaufenden Tragring 9 mit einer in radialer Richtung innnenseitig daran angeformten Abstreiflippe 7. Die Abstreiflippe 7 ist in Einsteckrichtung eines Rohrendes und somit in Richtung zum Grundkörper 1 geneigt. Die Abstreiflippe 7 weißt eine gewisse Flexibilität auf. Der Innendurchmesser der Abstreiflippe 7 ist kleiner als der Nenndurchmesser eines in den Steckverbinder S einzusetzenden Rohrendes. Infolge der geneigten Anordnung der Abstreiflippe 7 ist eine Relativbewegung zwischen dem Rohrende und der Mitnehmerscheibe 6 in Einschubrichtung mit wesentlich geringerer Kraft als für die Gegenrichtung ausgeführt werden kann. Damit wird bei einer Bewegung des Rohrendes in Gegenrichtung die Mitnehmerscheibe 6 mitgenommen. Die Mitnehmerscheibe 6 liegt zum Durchstecken eines Rohrendes an einem Anschlag des Grundkörpers 1 als Widerlager an.

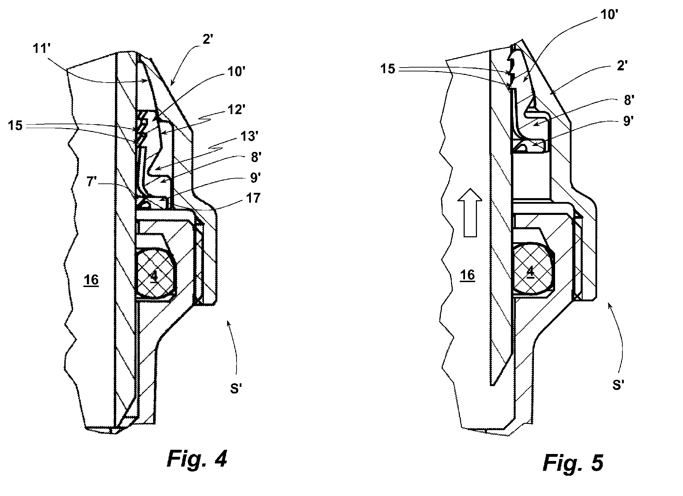

Der Klemmring 5 trägt mehrere axial von einem klemmseitigen Tragring 8 entgegen der Einsteckrichtung eines Rohrendes abragende Klemmsegmente 10. Diese sind in Umfangsrichtung verteilt an dem Tragring 8 angeordnet und mit ihrer Längsachse parallel zur Längsachse der Durchgangsöffnung 3 in der Überwurfmutter 2 ausgerichtet. Die einzelnen Klemmsegemente 10 sind durch Spalte voneinander getrennt. Auch eine gewisse Schrägstellung zur Längsachse ist denkbar. Die genannte axiale Segmentierung des Klemmrings 5 in Verbindung mit einer materialgeschwächten Knickstelle 13 im Übergang zwischen dem umlaufend durchgehenden, klemmseitigen Tragring 8 und jedem der Klemmsegmente 10 stellt sicher, dass mit der zur Verfügung stehenden Kraft die Klemmung eines Rohrendes durch eine radial nach innen gerichtete Umfassung erfolgt, bei der die Klemmsegmente 10 in radialer Richtung nach innen verstellt werden. Auf der Außenseite der Klemmsegmente 10 am Klemmring 5 ist jeweils eine konische Gleitbahn 12 vorgesehen, die komplementär zur einer Stellschräge 11 als Widerlager an der Innenwandung der Überwurfmutter 2 geformt ist, wie dieses ist in den vergrößerten Darstellungen der Figuren 4 und 5 ersichtlich ist.

Im Grundkörper 1 ist ein Dichtelement 4 in Form eines O-Rings in eine Ausnehmung 14 eingelegt. Im montierten Zustand liegt die Wandung des Rohrendes an diesem Dichtelement 4 an. Dieses ist in Figur 5 ersichtlich, die nachfolgend noch genauer erläutert wird.

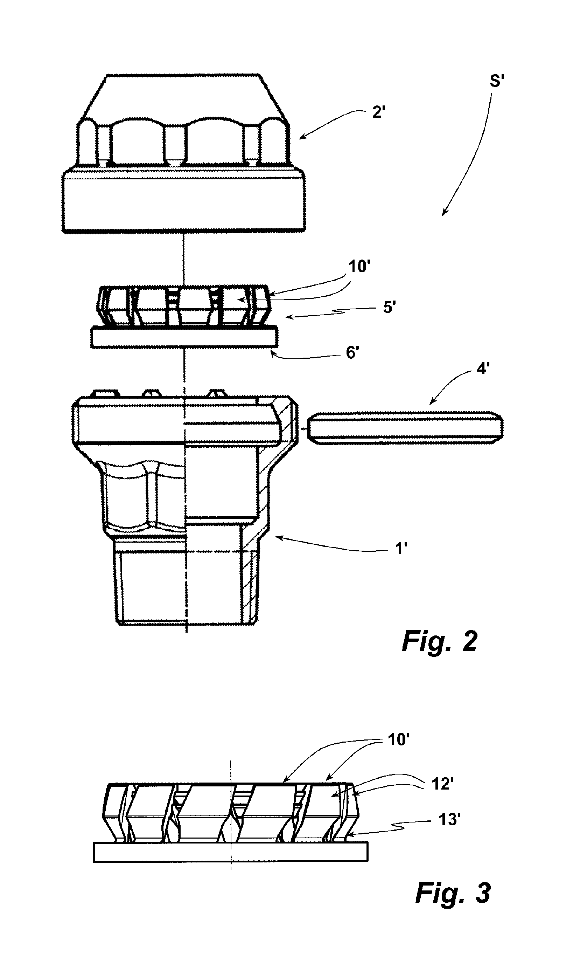

Figur 2 zeigt eine Ausführungsvariante eines Steckverbinders S'. Bei diesem sind gleiche Bauteile wie bei dem Steckverbinder S mit denselben Bezugszeichen gekennzeichtnet, die um ein Apostoph ergänzt sind. Bei dem Steckverbinder S' sind der Klemmring 5' und die Mitnehmerscheibe 6' miteinander zu einer Baueinheit verbunden. Zu diesem Zweck verfügt der Tragring 8' über einen seine äußere Mantelfläche verlängernden kragenartigen Bördelfortsatz 17, durch die Mitnehmerscheibe 6' eingefasst ist. Gehalten ist die Mitnehmerscheibe 6' innerhalb der durch den Bördelfortsatz 17 gebildeten Einfassung durch Bördeln des freien Endes des Bördelfortsatzes 17 um die von dem Klemmring 5' wegweisende äußere Kante der Mitnehmerscheibe 6'. Infolge dessen ist in der perspektivischen Ansicht der Figur 3 die Mitnehmerscheibe 6' nicht mehr separat sichtbar. Für den Fall, dass ein aus Klemmring und Mitnehmerscheibe gebildetes einstückiges Bauteil im Rahmen eines solchen Steckverbinders verwendet werden soll, können diese beiden Elemente - Mitnehmerscheibe und Klemmring - auch auf andere Weise miteinander verbunden sein, beispielsweise auch stoffschlüssig.

Der Vorteil einer Kopplung zwischen dem Klemmring 5' und der Mitnehmerscheibe 6' ist darin zu sehen, dass zur Ausführung einer Verklemmung eines Rohrendes im Steckverbinder S' die Mitnehmerscheibe 6' nicht zunächst axial gegen den Klemmring 5' zu führen ist. Stattdessen ist aufgrund der Kopplung die Relativlage zwischen Klemmring 5' und Mitnehmerscheibe 6' festgelegt, was die Fehlerwahrscheinlichkeit bei einer Montageschritt verringert.

Bei den in den Figuren 1 und 2 dargestellten Steckverbindern S, S' sind sämtliche Elemente mit Ausnahme des Dichtringes aus einem Messingwerkstoff hergestellt. Als Dichtring wird vorzugsweise ein solcher aus einem Elastomer eingesetzt.

Figur 4 zeigt ein in den Steckverbinder S' eingeführtes Rohrende 16, wobei das Rohrende 16 über das Dichtelement 4' hinaus bis zu einem hierfür vorgesehenen Anschlag in der Rohraufnahme im Grundkörper 1' geführt ist. Als Folge durchgreift das Rohrende 16 mit einem gewissen Abschnitt das Dichtelement 4', so dass zur nachfolgenden Verklemmung eine Bewegung entgegen der Rohreinsteckrichtung über eine hinreichende Wegstrecke möglich ist, ohne dass der Dichtschluss zwischen dem Rohrende 16 und dem Dichtelement 4' verloren geht.

Ferner ist aus Figur 4 die Stellung der gekoppelten Baueinheit aus Klemmring 5' und Mitnehmerscheibe 6' im nicht verklemmten Zustand ersichtlich, wobei die Klemmrillen 15 der Klemmsegmente 10' des Klemmrings 5' die Wandung des Rohrendes 16 nicht berühren. Beim Einführen des Rohrendes 16 in den Steckverbinder S' wurde die umlaufende Abstreiflippe 7' der Mitnehmerscheibe 6' in Einsteckrichtung verstellt und zwar gegen die aus der Geometrie und der Materialelastizität resultierende Rückstellkraft. Bei den mit seinem Rohrende 16 in den Steckverbinder S' eingesetzten Rohr handelt es sich um ein Kunststoffrohr. Beim Einschieben desselben durch die Abstreiflippe 7' ist dessen Mantelfläche von Verschmutzungen gereinigt worden. Gleichfalls sind Riefen auf der Mantelfläche des Rohrendes 16 egalisiert worden. Mithin hat die Abstreiflippe 7' bei einem Einsatz von Kunststoffrohren gleichzeitig die Funktion eines Abstreifers bzw. Abziehers. In Kontakt mit dem Dichtring 4' ist somit eine äußere Mantelfläche des Rohrendes 16 gelangt, welche von Verschmutzungen befreit und glatt ist und demzufolge vollumfänglich an dem Dichtring 4' anliegt. Die Dichtfunktion des Steckverbinders S' ist durch Einschieben des Rohrendes 16 in den Dichtring 4' hergestellt.

Figur 5 zeigt den verklemmten Zustand des in dem Steckverbinder S' gesichert gehaltenen Rohrendes 16. Es ist ersichtlich, dass zur Verklemmung das Rohrende 16 entgegen seiner Einschubrichtung bewegt worden ist. Eine solche Bewegung des Rohrendes 16 erfolgt typischerweise bei einer ersten Druckbeaufschlagung (Abdrücken) der Installation. Die dadurch auf das Rohrende 16 entgegen seiner Einschubrichtung wirkende Bewegungskomponente nimmt die Mitnehmerscheibe 6' und dementsprechend den Klemmring 5' mit, so dass letzterer mit seiner Gleitbahn 12' an der Stellschräge 11' der Überwurfmutter 2' in radialer Richtung nach innen gedrückt wird. Die Folge dieser Bewegung ist, dass die ebenfalls aus einem Messingwerkstoff herstellten Klemmsegmente 10' in radialer Richtung nach innen und damit die daran angeformten, sägezahnartig ausgebildeten Klemmrillen 15 in die äußere Mantelfläche des Kunststoffrohres 16 eingedrückt werden. Zu bemerken ist, dass bei dieser Bewegung die Dichtungsanordnung zwischen der äußeren Mantelfläche des Rohrendes 16 und dem Dichtring 4' und somit mit der Innenseite des Grundkörpers 1' unverändert bleibt.

Die zu dem Figuren 4 und 5 beschriebene Funktionsweise des Steckverbinders S' gilt gleichermaßen für die Funktionsweise des Steckverbinders S der Figur 1, der sich allein durch die Konzeption der zweistückigen Ausgestaltung seines Klemmringes 5 und seiner Mitnehmerscheibe 6 von dem Steckverbinder S' unterscheidet.

Die Konzeption der konischen Gleitfläche 12, 12' und der ebenfalls konischen Stellschräge 11, 11' bewirkt, dass in einem ersten Abschnitt der Bewegung des Klemmringes 5, 5' dessen Klemmsegmente 10, 10' zunächst zur Anlage an die Mantelfläche des Rohrendes 16 gebracht werden, um einen Klemmschluss der Klemmsegmente 10, 10' bzw. deren Klemmrillen 15 mit dem Rohrende herzustellen, bevor dann auf kurzer Bewegungsstrecke des Klemmringes 5, 5' gegenüber dem Rohrende 16 die Klemmrillen 15 in die Mantelfläche des Rohrendes 16 eingedrückt werden. Daher werden die Klemmrillen 15 im Wesentlichen nur mit einer radialen Bewegung in die Mantelfläche eingedrückt, so dass das Rohrende 16 in dem Steckverbinder S, S' quasi verriegelt ist und selbst höchsten Abzugskräften standhält.

Die beschrieben Steckverbinder S, S' sind zwar besonders zum Anschließen von Kunststoffrohren oder Rohren mit einem Kunststoffmantel konzipiert, eignen sich jedoch gleichfalls zum Anschließen von Metallrohren. Als Klemmring sind solche aus Metall, beschreiben. Dieser kann, insbesondere wenn geringere Anforderungen an die Abzugsfestigkeit gestellt sind, auch durch einen Kunststoffklemmring ersetzt werden. Gleiches gilt auch für das Überwurfelement und den Grundkörper.

### Bezugszeichenliste

- 1, 1': Grundkörper
- 2, 2': Überwurfmutter
- 3: Durchgangsöffnung
- 4, 4': Dichtelement
- 5, 5': Klemmring
- 6, 6': Mitnehmerscheibe
- 7, 7': Abstreiflippe
- 8, 8': klemmseitiger Tragring
- 9, 9': mitnehmerseitiger Tragring
- 10, 10': Klemmsegment
- 11, 11': Stellschräge
- 12, 12': Gleitbahn
- 13, 13': Knickstelle
- 14: Ausnehmung
- 15: Klemmrille
- 16: Rohrende
- 17: Bördelfortsatz
- S, S': Steckverbinder

## Patentansprüche

1. Steckverbinder zum Anschluss eines Rohrendes (16), umfassend einen Grundkörper (1, 1') mit einer Aufnahme zur Aufnahme des Rohrendes (16), ein Überwurfelement (2, 2') mit einer Durchgangsöffnung (3) zum Einführen des Rohrendes (16), wobei Verbindungsmittel zur Befestigung des Überwurfelementes (2, 2') am Grundkörper (1) vorgesehen sind, ein Dichtelement (4, 4') zur Abdichtung des Grundkörpers (1, 1') gegen die äußere Mantelfläche des anzuschließenden Rohrendes (16), einen Klemmring (5, 5'), der bei einer gegen die Einschubrichtung des Rohrendes (16) gerichteten, axialen Bewegung mit einem Widerlager in Wechselwirkung tritt und als Folge einer radial nach innen gerichteten Deformation zum Verklemmen des Rohrendes (16) unterliegt sowie eine beim Anschluss das Rohrende (16) umschließende und nach erfolgtem Anschluss an das Rohrende (16) angeschlossene Mitnehmerscheibe (6, 6'), **dadurch gekennzeichnet, dass** die Mitnehmerscheibe (6, 6') in Einschubrichtung des Rohrendes (16) in den Steckverbinder (S, S') zwischen dem Klemmring (5, 5') und dem Dichtelement (4, 4') angeordnet ist und bei einer Bewegung des in den Steckverbinder (S, S') eingesetzten Rohrendes (16) aufgrund des erfolgten Anschlusses derselben an das Rohrende (16) gegen die Einschubrichtung von diesem mitgenommen wird und in dieser Richtung den Klemmring (5, 5') mit der Kraft zum Verklemmen desselben an der äußeren Mantelfläche des Rohrendes (16) beaufschlagt.

2. Steckverbinder nach Anspruche 1, **dadurch gekennzeichnet, dass** die Mitnehmerscheibe (6, 6') eine am anzuschließenden Rohrstück umlaufend anliegende Abstreiflippe (7, 7') umfasst.

3. Steckverbinder nach Anspruch 2, **dadurch gekennzeichnet, dass** die Abstreiflippe (7, 7') gegenüber der Radialen in Einschubrichtung des anzuschließenden Rohrendes (16) angestellt ist und als Abzugssicherung dient.

4. Steckverbinder nach einem der vorausgehenden Ansprüche, **dadurch gekennzeichnet, dass** der Klemmring (5, 5') einen klemmseitigen Tragring (8, 8') und die Mitnehmerscheibe (6, 6') einen mitnehmerseitigen Tragring (9, 9') umfasst, wobei der klemmseitige Tragring (8, 8') und der mitnehmerseitige Tragring (9, 9') dergestalt konzipiert sind, dass diese beim Anschluss eines Rohrendes (16) nicht deformiert werden.

5. Steckverbinder nach Anspruch 4, **dadurch gekennzeichnet, dass** der klemmseitige Tragring (8, 8') und der mitnehmerseitige Tragring (9, 9') nach dem Anschluss eines Rohrendes (16) stirnseitig gegeneinander anliegen.

6. Steckverbinder nach einem der vorausgehenden Ansprüche, **dadurch gekennzeichnet, dass** der Klemmring (5') und die Mitnehmerscheibe (6') über ein Kopplungsmittel, insbesondere mit einer Bördelung miteinander verbunden sind.

7. Steckverbinder nach einem der vorausgehenden Ansprüche, **dadurch gekennzeichnet, dass** der Klemmring (5, 5') mehrere in Umfangsrichtung angeordnete, eine axiale Erstreckung aufweisende, durch jeweils einen Spalt voneinander getrennte Klemmsegmente (10, 10') umfasst, die zum Verklemmen eines Rohrendes (16) eine in Bezug auf die Längsachse des Rohrendes (16) radial nach innen gerichtete Bewegung ausführen.

8. Steckverbinder nach einem der vorausgehenden Ansprüche, **dadurch gekennzeichnet, dass** das Dichtelement (4, 4') im Grundkörper (1, 1') des Steckverbinders (S, S') angeordnet ist.

9. Steckverbinder nach einem der vorausgehenden Ansprüche, **dadurch gekennzeichnet, dass** der Grundkörper (1, 1') einen Anschlag zur Begrenzung der Bewegung der Mitnehmerscheibe (6. 6') in Einschubrichtung des Rohrendes (16) umfasst.

10. Steckverbinder nach einem der vorausgehenden Ansprüche, **dadurch gekennzeichnet, dass** als Überwurfelement eine mit dem Grundkörper (1, 1') verschraubte Überwurfmutter (2, 2') vorgesehen ist.

11. Steckverbinder nach einem der vorausgehenden Ansprüche, **dadurch gekennzeichnet, dass** das Widerlager, an dem sich der Klemmring (5, 5') bei einer axialen Bewegung der Mitnehmerscheibe (6, 6') abstützt, ein Abschnitt der Innenwand des Überwurfelements (2, 2') ist.

12. Steckverbinder nach einem der vorausgehenden Ansprüche, **dadurch gekennzeichnet, dass** der Grundkörper (1, 1') und/oder die Überwurfmutter (2, 2') und/oder der Klemmring (5, 5') und/oder die Mitnehmerscheibe (6, 6') aus einer Messinglegierung hergestellt sind.

13. Steckverbinder zum Anschluss eines Rohrendes (16), umfassend einen Grundkörper (1, 1') mit einer Aufnahme zur Aufnahme des Rohrendes (16), ein Überwurfelement (2, 2') mit einer Durchgangsöffnung (3) zum Einführen des Rohrendes (16), wobei Verbindungsmittel zur Befestigung des Überwurfelementes (2, 2') am Grundkörper (1) vorgesehen sind, ein Dichtelement (4, 4') zur Abdichtung des Grundkörpers (1, 1') gegen die äußere Mantelfläche des anzuschließenden Rohrendes (16), einen Klemmring (5, 5'), der bei einer gegen die Einschubrichtung des Rohrendes (16) gerichteten, axialen Bewegung mit einem Widerlager in Wechselwirkung tritt und als Folge einer radial nach innen gerichteten Deformation zum Verklemmen des Rohrendes (16) unterliegt sowie eine Mitnehmerscheibe (6, 6'), die beim Anschluss das Rohrende (16) umschließt und als Abzugssicherung dient, **dadurch gekennzeichnet, dass** der Klemmring (5, 5') mehrere in Umfangsrichtung angeordnete, eine axiale Erstreckung aufweisende, durch jeweils einen Spalt voneinander getrennte Klemmsegmente (10, 10') umfasst, die zum Verklemmen eines Rohrendes (16) eine in Bezug auf die Längsachse des Rohrendes (16) radial nach innen gerichtete Bewegung ausführen.

14. Steckverbinder nach Anspruch 13, **dadurch gekennzeichnet, dass** die Klemmsegmente (10, 10') auf ihrer radial äußeren Seite eine komplementär zur Stellschräge (11, 11') ausgebildete, konische Gleitbahn (12, 12') aufweisen.

15. Steckverbinder nach Anspruch 14, **dadurch gekennzeichnet, dass** die konische Gleitbahn (12) gekrümmt ausgebildet ist.

16. Steckverbinder nach einem der Ansprüche 13 bis 15, **dadurch gekennzeichnet, dass** der Klemmring (5, 5') einen klemmseitigen Tragring (8, 8') umfasst, der einstückig mit den Klemmsegmenten (10, 10') über eine materialgeschwächte Knickstelle (13, 13') verbunden ist.

17. Steckverbinder nach einem der Ansprüche 13 bis 16, **dadurch gekennzeichnet, dass** der Klemmring (5, 5') aus einer Messinglegierung hergestellt ist.
